# FASCICULE DE BREVET EUROPEEN

(11) **EP 4 368 515 B1**
(45) Date de publication et mention de la délivrance du brevet: **15.01.2025**
(21) Numéro de dépôt: 23200550.4
(22) Date de dépôt: 28.09.2023
(51) Int. Cl.: B64D 33/04, F01D 25/28, F02C 7/00, B64C 27/04

(54) **AÉRONEF MUNI D'UN CONDUIT D'ÉCHAPPEMENT COUPLÉ À UN SYSTÈME DE STABILISATION**
FLUGZEUG MIT EINEM AN EIN STABILISIERUNGSSYSTEM GEKOPPELTEN ABGASROHR
AIRCRAFT HAVING AN EXHAUST CONDUIT COUPLED TO A STABILIZATION SYSTEM

(30) Priorité: 09.11.2022 FR 2211666
(43) Date de publication de la demande: 15.05.2024
(73) Titulaire: Airbus Helicopters, 13725 Marignane Cedex (FR)
(72) Inventeur: LEGRAS, Guillaume, 13880 VELAUX (FR); MORENTE, Franck, 13090 AIX EN PROVENCE (FR); PINTO, Philippe, 13250 SAINT-CHAMAS (FR); FELMY, Kevin, 13100 AIX EN PROVENCE (FR)
(74) Mandataire: GPI Brevets

(56) Documents cités:
- WO-A1-2009/083074
- WO-A1-99/54204
- US-A- 2 653 585

## Description

La présente invention concerne un aéronef muni d'un conduit d'échappement couplé à un système de stabilisation qui est configuré pour stabiliser le conduit d'échappement.

Un aéronef, et par exemple un giravion, peut comprendre un moteur qui expulse des gaz de combustion par une tuyère d'éjection.

Le moteur est usuellement logé dans un compartiment de l'aéronef dénommé « compartiment moteur ». Le compartiment moteur peut être délimité par une ou des cloisons pare-feu et/ou au moins un capot.

L'aéronef peut alors comprendre un conduit d'échappement qui est ouvert sur le compartiment moteur et sur un milieu extérieur à l'aéronef. Le conduit d'échappement peut être fixé et disposé dans un logement délimité par un capot mobile, voire une cloison pare-feu par exemple. Ce conduit d'échappement entoure localement la tuyère d'éjection. Ce conduit d'échappement peut permettre de mélanger les gaz de combustion issus de la tuyère d'éjection d'un moteur avec de l'air frais provenant du compartiment moteur et/ou de diriger les gaz vers des zones préférentielles. La tuyère d'éjection peut être qualifiée de tuyère primaire ou principale, le conduit d'échappement pouvant être qualifié de tuyère secondaire.

En outre, le développement d'un conduit d'échappement est complexe en raison notamment de la température élevée des gaz éjectés, de l'ordre de plusieurs centaines de degrés Celsius, de la pression exercée par ces gaz sur le conduit d'échappement ainsi que des phénomènes vibratoires.

Par exemple, la rotation d'un rotor principal d'un hélicoptère, le fonctionnement d'un moteur et une structure portant le conduit d'échappement sont des sources de vibrations susceptibles d'exciter un conduit d'échappement. Le déplacement de l'air à proximité du conduit d'échappement est aussi une source de vibrations pour ce conduit d'échappement.

Dès lors, un conduit d'échappement est susceptible de se déformer en vol en raison de ces diverses contraintes, notamment en raison des contraintes thermiques ainsi que de son comportement vibratoire et dynamique et du calage de sa fréquence propre au regard des fréquences des excitations subies.

La modification du conduit d'échappement pour limiter ces déformations subies peut être relativement délicate, en termes de coût financier, de temps, voire de masse. En outre, la modification d'un conduit d'échappement peut avoir un impact sur son environnement, et par exemple sur la structure porteuse devant porter le conduit d'échappement.

Le document EP3575219 décrit un giravion ayant au moins un moteur associé à un conduit d'échappement. Le conduit d'échappement est fixé à une structure fixe du giravion par un mécanisme pour être stabilisé statiquement ainsi que suite à une dilatation thermique.

Le document EP2894099 décrit un procédé de fabrication d'un conduit d'échappement muni d'anneaux de fixation.

Le document WO2009/083074A1 décrit un dispositif permettant de refroidir un gaz chaud devant être évacué d'un avion, lequel dispositif comprend un canal conçu pour conduire le gaz chaud d'une source de gaz chaud pouvant être reliée au dispositif à un point de sortie, ainsi qu'un bâti qui entoure le canal et qui est conçu pour maintenir ce canal. Le canal est constitué d'une ou de plusieurs sections de tube et présente un ou plusieurs points d'entrée d'air de refroidissement qui peuvent être raccordés à une ou plusieurs sources d'air de refroidissement afin de mélanger le gaz chaud à de l'air de refroidissement. Les documents WO 99/54204 A1 et US 2 653 585 A sont aussi connus.

La présente invention a alors pour objet de proposer un aéronef selon la revendication 1 qui est muni d'un conduit d'échappement coopérant avec un système de stabilisation innovant.

L'invention vise un aéronef muni d'au moins un conduit d'échappement pour éjecter des gaz provenant d'un moteur, le conduit d'échappement étant logé partiellement dans un logement interne de l'aéronef, le logement étant séparé d'un milieu extérieur situé en dehors de l'aéronef par au moins un capot, ce capot étant mobile par rapport à une structure porteuse de l'aéronef, le conduit d'échappement comprenant un tronçon éjecteur traversant un passage du capot sans toucher le capot, un espace séparant le tronçon éjecteur du capot.

Cet aéronef comporte selon cette revendication 1 au moins un système de stabilisation couplé au conduit d'échappement, le système de stabilisation comprenant un anneau raidisseur solidarisé au conduit d'échappement et au moins une fixation connectant le conduit d'échappement au capot. Ainsi, le système de stabilisation comporte deux dispositifs dissimilaires qui fonctionnent en synergie pour améliorer, en utilisation, le comportement du conduit d'échappement au regard des contraintes subies. Des caractéristiques optionnelles de cet aéronef sont décrites dans les revendications dépendantes 2-13.

Un anneau raidisseur est positionné autour du conduit d'échappement, et contre ce conduit d'échappement. En particulier, l'anneau raidisseur permet de modifier la fréquence propre du conduit d'échappement pour l'éloigner d'une fréquence d'excitation. L'anneau raidisseur permet aussi de contraindre localement le conduit d'échappement pour éviter sa déformation, par exemple en évitant une ovalisation du conduit d'échappement. Cet anneau raidisseur peut être agencé de manière à avoir un impact acceptable sur l'aérodynamique de l'aéronef, voire sur la ventilation du logement.

La ou les fixations permettent de fixer le conduit d'échappement au capot afin de stabiliser ce conduit d'échappement en vol. La ou les fixations peuvent être définies pour ne pas entraver l'expansion thermique du conduit d'échappement en fonctionnement tout en contraignant son déplacement dans le référentiel de l'aéronef. La ou les fixations peuvent de plus être définies pour autoriser une désolidarisation rapide du conduit d'échappement et du capot, et ainsi pour autoriser l'ouverture du capot.

Ce système de stabilisation peut avoir un impact massique faible, n'a pas d'impact sur l'environnement du conduit d'échappement à l'exception du capot et peut être installé sur un aéronef existant durant une campagne dite de « retrofit » en langue anglaise.

L'aéronef peut de plus comprendre une ou plusieurs des caractéristiques qui suivent notamment, prises seules ou en combinaison.

Ainsi, l'anneau raidisseur peut entourer le conduit d'échappement.

L'anneau raidisseur peut entourer une section du conduit d'échappement, à savoir totalement et donc à 360 degrés autour d'un volume interne du conduit d'échappement.

Alternativement, l'anneau raidisseur peut s'étendre sur un angle inférieur à 360 degrés autour d'un axe géométrique, et donc du volume interne. L'anneau raidisseur entoure alors seulement partiellement le conduit d'échappement.

Selon une possibilité compatible avec les précédentes, l'anneau raidisseur peut être disposé autour du tronçon éjecteur.

L'anneau raidisseur génère une pression sur le conduit d'échappement lorsque ce conduit d'échappement se dilate sous l'effet de la température des gaz. La pression générée par l'anneau raidisseur sur le conduit d'échappement peut être optimisée lorsque l'anneau raidisseur est disposé sur le tronçon éjecteur qui est susceptible de subir une dilatation thermique plus faible qu'un tronçon d'entrée du conduit d'échappement par exemple. En outre, l'anneau raidisseur tend à raidir le tronçon éjecteur qui est susceptible de se déformer au sein d'un conduit d'échappement usuel.

Selon une possibilité compatible avec les précédentes, l'anneau raidisseur peut être disposé au moins partiellement dans le milieu extérieur.

L'impact sur l'aérodynamisme de l'aéronef est ainsi limité. L'anneau raidisseur reste agencé au plus près, voire sur le tronçon du conduit d'échappement qui est susceptible de se déformer au sein d'un conduit d'échappement usuel.

Alternativement et en fonction des besoins, l'anneau raidisseur peut être disposé totalement dans le milieu extérieur.

Selon une possibilité compatible avec les précédentes, l'anneau raidisseur peut comporter un profil en L, T, en C ou en oméga. La forme en oméga peut comprendre une branche sensiblement plane, suivie d'une forme sensiblement de C arrondie ou non et basculée de 90 degrés vers la droite puis d'une autre branche sensiblement plane.

Un tel profil peut être suffisant pour modifier de manière adéquate le comportement du conduit d'échappement.

Selon une possibilité compatible avec les précédentes, l'anneau raidisseur peut être fixé au conduit d'échappement par des attaches de raidissement dissociables.

Le terme « dissociables » désigne des attaches pouvant être enlevées sans dégrader l'anneau raidisseur et/ou le conduit d'échappement durant une campagne de maintenance.

Par exemple, les attaches de raidissement comportent des rivets ou autres.

Selon une possibilité compatible avec les précédentes, ladite au moins une fixation peut comporter un premier support solidaire du conduit d'échappement et un deuxième support solidaire du capot, ladite au moins une fixation comprenant une attache de liaison fixant le premier support au deuxième support.

L'attache de liaison peut être une attache dite rapide. Selon des exemples donnés à titre d'illustration, l'attache de liaison peut comprendre une attache quart de tour voire une fixation connue sous la marque dzus^{®} par exemple. Un opérateur peut alors facilement dissocier le conduit d'échappement et le capot.

Selon une possibilité compatible avec les précédentes, ladite au moins une fixation peut être agencée au moins partiellement dans ledit logement.

La fixation peut être intégralement logée dans le logement ou peut s'étendre en dehors du logement. Par exemple, la fixation précitée peut être localisée dans le milieu extérieur.

Selon une possibilité compatible avec les précédentes, ladite au moins une fixation peut être accessible via ledit espace séparant le tronçon éjecteur du capot.

L'espace peut présenter des dimensions supérieures à des dimensions d'une main humaine ou d'un outil apte à ouvrir la fixation.

A titre illustratif, l'espace peut présenter une dimension au moins supérieure à 5 centimètres.

L'agencement du conduit d'échappement dans un passage du capot ayant des dimensions plus importantes permet de ménager un espace pouvant être traversé par un outil et/ou une main. Un opérateur peut introduire une main dans l'espace pour désolidariser le conduit d'échappement du capot, afin d'ouvrir le capot par exemple.

Selon une possibilité compatible avec les précédentes, ladite au moins une fixation peut être adjacente à l'anneau raidisseur.

La ou les fixations sont au plus près de l'anneau raidisseur pour apporter des points de fixation et de la raideur sensiblement au même endroit.

Eventuellement, au moins une fixation peut être fixée à l'anneau raidisseur.

La fixation connecte ainsi le conduit d'échappement au capot via l'anneau raidisseur.

Alternativement, la fixation peut être fixée directement au conduit d'échappement.

Selon une possibilité compatible avec les précédentes, ladite au moins une fixation peut comporter plusieurs fixations disposées autour du conduit d'échappement.

Les fixations sont alors réparties, de manière iso-répartie ou non iso-répartie, autour du conduit d'échappement pour stabiliser le conduit d'échappement en plusieurs zones et selon plusieurs axes géométriques.

L'invention et ses avantages apparaîtront avec plus de détails dans le cadre de la description qui suit avec des exemples donnés à titre illustratif en référence aux figures annexées qui représentent :
la figure 1, un schéma en couple illustrant un aéronef selon l'invention,
la figure 2, un schéma en coupe illustrant un aéronef selon l'invention, et
la figure 3, une vue présentant partiellement un aéronef selon l'invention.

Les éléments présents dans plusieurs figures distinctes sont affectés d'une seule et même référence.

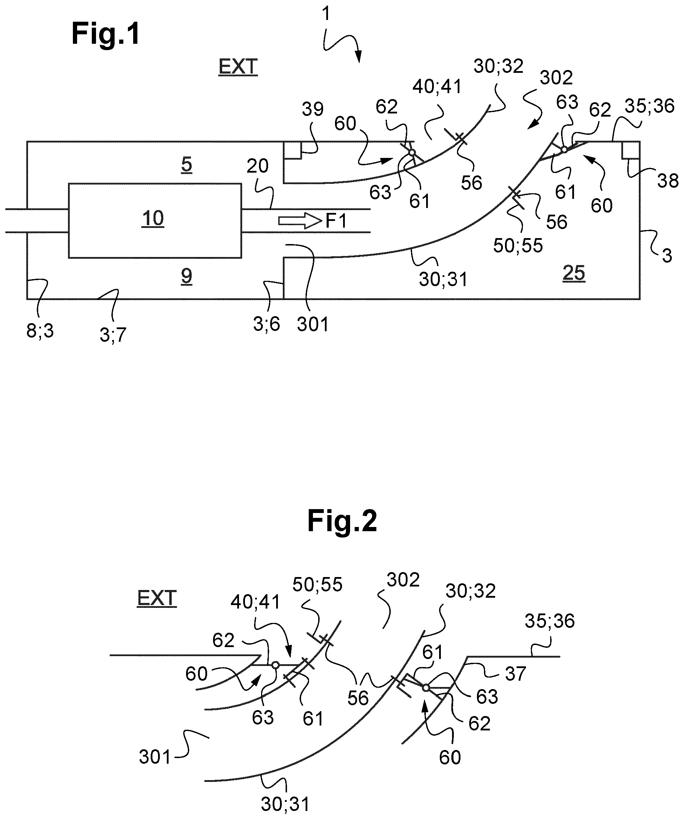

La figure 1 présente un aéronef 1 selon l'invention.

Un tel aéronef 1 comprend une structure porteuse 3 portant au moins un moteur 10. Le moteur 10 est en particulier disposé dans un compartiment moteur 5.

Le compartiment moteur 5 est délimité par au moins une paroi 6, 7, 8 et 9. La ou les parois 6, 7, 8 et 9 peuvent être des parois anti-feu, par exemple ignifugées. Par exemple, le compartiment moteur 5 est délimité selon un axe longitudinal par au moins une paroi longitudinale 6, 8. Par exemple, le compartiment moteur 5 est délimité selon un axe transversal par au moins une paroi transversale 7 et un capotage, et verticalement au moins par une paroi de fond 9.

Le ou les moteurs 10 peuvent être des moteurs thermiques aptes à brûler un carburant pour mettre en mouvement chaque arbre de puissance. Selon une possibilité, le ou les moteurs 10 peuvent être des turbomoteurs. Alternativement, le ou les moteurs 10 peuvent être des moteurs à pistons par exemple.

Indépendamment de la nature du ou des moteurs 10 et de leur agencement, chaque moteur 10 comporte une tuyère d'éjection 20 pour au moins éjecter selon la flèche F1 des gaz résultant de la combustion du carburant dans le moteur 10 considéré. Par exemple, la tuyère d'éjection 20 traverse une paroi longitudinale 6.

Dès lors, un conduit d'échappement 30 selon l'invention entoure au moins partiellement la tuyère d'éjection 20, à savoir toute la tuyère d'éjection 20 ou un tronçon de la tuyère d'éjection 20 et par exemple au minimum une portion d'éjection de la tuyère d'éjection 20 par laquelle des gaz sont expulsés. Par exemple, le conduit d'échappement 30 entoure au moins une partie de la tuyère d'éjection 20 située en dehors du compartiment moteur 5.

Le conduit d'échappement 30 peut comprendre une paroi périphérique. La paroi périphérique délimite un volume interne situé à l'intérieur du conduit d'échappement 30 et accueillant au moins un tronçon de la tuyère d'éjection 20.

Par ailleurs, le conduit d'échappement 30 s'étend d'une section d'entrée 301, débouchant éventuellement sur le compartiment moteur 5, jusqu'à une section de sortie 302, débouchant éventuellement sur un milieu EXT situé à l'extérieur de l'aéronef 1. Dès lors, de l'air présent dans le compartiment 5 peut être aspiré dans le conduit d'échappement 30, puis est expulsé en dehors du véhicule avec des gaz provenant de la tuyère d'éjection 20 par la section de sortie 302.

En particulier, le conduit d'échappement peut comprendre un tronçon d'entrée 31 comprenant la section d'entrée 301, puis un tronçon éjecteur 32 comprenant la section de sortie 302.

Par ailleurs, le conduit d'échappement 30 est logé partiellement dans un logement 25 interne de l'aéronef 1.

Telle qu'illustrée sur la figure 1, la section d'entrée du conduit peut être fixée à une paroi délimitant le logement, et par exemple la paroi 8.

Hors cas de déformation ou de vibrations, le conduit d'échappement 30 peut être immobile dans le référentiel de l'aéronef et dans le logement 25.

Ce logement 25 est notamment séparé du milieu extérieur EXT au moins par un capot 35. Le capot 35 est mobile par rapport à la structure porteuse 3 de l'aéronef 1, et au conduit d'échappement. A cet effet, le capot 35 peut être connecté à la structure porteuse 3 par au moins un système de mobilité 38, 39 illustré schématiquement. Un tel système de mobilité 38,39 peut comprendre au moins un rail, au moins un coulisseau, au moins une charnière par exemple.

Le capot 35 peut comprendre un panneau de capotage 36. Le capot 35 peut comprendre un carter de protection 37 solidaire du panneau de capotage 36 tel qu'illustré sur la figure 2 décrites par la suite.

Indépendamment des composants du capot 35 et des systèmes de mobilité 38, 39 le rendant mobile par rapport à la structure porteuse 3, le capot 35 comporte un passage 40. Un tel passage 40 peut comprendre une découpe réalisée dans le panneau de capotage 36, et le cas échéant non obturé par le carter de protection 37.

Dès lors, le tronçon éjecteur 32 du conduit d'échappement 30 traverse le passage 40 du capot 35 sans toucher ce capot 35. Le tronçon éjecteur peut ainsi s'étendre dans le milieu extérieur EXT. Un espace 41 sépare donc le tronçon éjecteur 32 du capot 35. Cet espace 41 est un espace annulaire qui entoure le conduit d'échappement en le séparant d'un bord délimitant le passage 40.

Selon un autre aspect, l'aéronef 1 comporte au moins un système de stabilisation 50 couplé à un conduit d'échappement 30. En présence de plusieurs moteurs 10 et de plusieurs conduits d'échappement 30 respectifs, chaque conduit d'échappement 30 est couplé à son propre système de stabilisation 50.

Indépendamment du nombre de systèmes de stabilisation 50, un tel système de stabilisation 50 permet de modifier le comportement dynamique et vibratoire du conduit d'échappement 30, sans contrainte sur la structure porteuse 3 ou le compartiment moteur 5 par exemple.

Un tel système de stabilisation 50 comprend un anneau raidisseur 55 qui est accolé au conduit d'échappement 30. L'anneau raidisseur peut entourer totalement le conduit d'échappement, à savoir à 360 degrés autour d'un axe géométrique, ou peut entourer partiellement le conduit d'échappement.

Cet anneau raidisseur 55 est ainsi rendu solidaire au conduit d'échappement 30.

Par exemple, l'anneau raidisseur 55 est agencé contre le tronçon éjecteur 32.

Eventuellement, l'anneau raidisseur 55 peut être disposé au moins partiellement dans le milieu extérieur EXT.

Selon une variante, l'anneau raidisseur 55 et le conduit d'échappement 30 forment une seule et même pièce, l'anneau raidisseur 55 et le conduit d'échappement 30 étant indissociables sans casse. Par exemple, l'anneau raidisseur 55 est soudé au conduit d'échappement 30.

Selon une autre variante, l'anneau raidisseur 55 est fixé au conduit d'échappement 30 par des attaches de raidissement 56 dissociables. Selon une illustration de cette possibilité, les attaches de raidissement 56 comprennent des rivets.

Selon une autre caractéristique, l'anneau raidisseur 55 peut avoir un profil en L, en T, en C ou en oméga. Un tel anneau raidisseur 55 permet de modifier la fréquence propre du conduit d'échappement 30 relativement facilement et à moindre coût.

Quelle que soit la manière de réaliser l'anneau raidisseur 55, le système de stabilisation 50 comporte aussi une ou des fixations 60 connectant le conduit d'échappement 30 au capot 35. Au moins une fixation 60 peut notamment être fixée au tronçon éjecteur 32. Selon les exemples illustrés, le système de stabilisation 50 comporte plusieurs fixations 60 disposées autour du conduit d'échappement 30.

Selon l'exemple de la figure 1, au moins une fixation 60 peut notamment être fixée au panneau de capotage 36 du capot 35.

De manière complémentaire ou alternative et en référence à la figure 2, au moins une fixation 60 peut notamment être fixée au carter de protection 37 du capot 35.

Quel que soit l'organe du capot 35 fixé à une fixation 60, au moins une fixation 60 est éventuellement positionnée afin d'être adjacente à l'anneau raidisseur 55.

Eventuellement, au moins une fixation 60 peut être fixée à l'anneau raidisseur 55.

Quel que soit le positionnement d'une fixation 60, cette fixation 60 peut comporter un premier support 61 et un deuxième support 62 assemblés l'un à l'autre par une attache de liaison 63.

Par exemple, le premier support 61 est solidaire du conduit d'échappement 30, directement ou via l'anneau raidisseur 55. Le premier support 61 peut être fixé au conduit d'échappement 30 ou à l'anneau raidisseur 55 par vissage, rivetage, collage, soudure, etc...

Par exemple, le deuxième support 62 est solidaire du capot 35. Le deuxième support 62 peut être fixé au capot 35 par vissage, rivetage, collage, soudure, etc...

En outre, le premier support 61 peut comprendre une chape mâle ou femelle comprenant au moins un premier orifice. De même, le deuxième support 62 peut comprendre une chape mâle ou femelle comprenant au moins un deuxième orifice. L'attache de liaison 63 comporte alors notamment une liaison traversant le ou les premiers orifices et le ou les deuxièmes orifices.

Selon un autre aspect, une fixation 60 peut se trouver au moins partiellement dans le logement 25. Par exemple, le premier support 61 d'une fixation 60 peut s'étendre en partie dans le milieu extérieur EXT, et le deuxième support 62 peut se trouver dans le logement 25. Selon une autre alternative optimisée d'un point de vue aérodynamique, toute la fixation 60 est agencée dans le logement 25. Alternativement, au moins une fixation 60 peut être entièrement dans le milieu extérieur EXT.

Eventuellement, au moins une fixation 60 est accessible à un opérateur via l'espace 41.

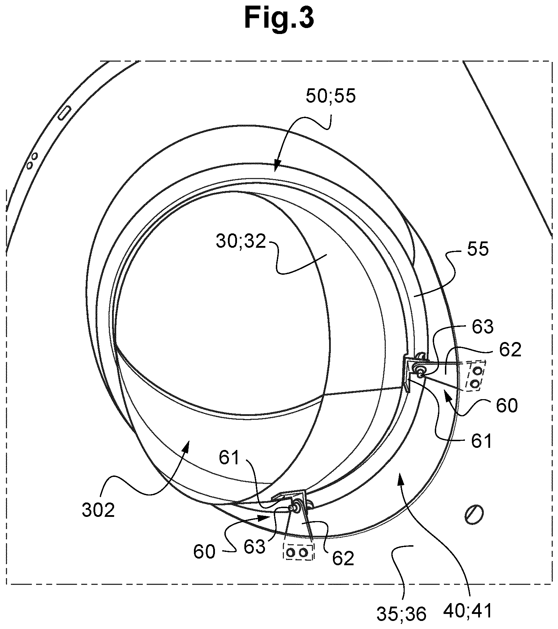

Dans ce contexte, la figure 3 illustre un exemple de réalisation comprenant plusieurs fixations 60. Le capot 35 est rendu localement transparent pour permettre de visualiser les fixations 60.

Chaque fixation 60 comporte un premier support 61, un deuxième support 62 et une attache de liaison 63. En outre, chaque fixation 60, et notamment son attache de liaison 63, est accessible à un opérateur via l'espace 41.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Aéronef (1) muni d'au moins un conduit d'échappement (30) pour éjecter des gaz provenant d'un moteur (10), le conduit d'échappement (30) étant logé partiellement dans un logement (25) interne de l'aéronef (1), le logement (25) étant séparé d'un milieu extérieur (EXT) situé en dehors de l'aéronef (1) par au moins un capot (35), le capot (35) étant mobile par rapport à une structure porteuse (3) de l'aéronef (1), le conduit d'échappement (30) comprenant un tronçon éjecteur (32) traversant un passage (40) du capot (35) sans toucher le capot (35), un espace (41) séparant le tronçon éjecteur (32) du capot (35), l'aéronef (1) comportant au moins un système de stabilisation (50) couplé au conduit d'échappement (30), le système de stabilisation (50) comprenant un anneau raidisseur (55) solidarisé au conduit d'échappement (30) et au moins une fixation (60) connectant le conduit d'échappement (30) au capot (35).

2. Aéronef selon la revendication 1,
**caractérisé en ce que** ledit anneau raidisseur (55) entoure le conduit d'échappement (30).

3. Aéronef selon la revendication 1,
**caractérisé en ce que** ledit anneau raidisseur (55) s'étend sur un angle inférieur à 360 degrés autour d'un axe géométrique.

4. Aéronef selon l'une quelconque des revendications 1 à 3,
**caractérisé en ce que** ledit anneau raidisseur (55) est disposé autour du tronçon éjecteur (32).

5. Aéronef selon l'une quelconque des revendications 1 à 4,
**caractérisé en ce que** ledit anneau raidisseur (55) est disposé au moins partiellement dans le milieu extérieur (EXT).

6. Aéronef selon l'une quelconque des revendications 1 à 5,
**caractérisé en ce que** ledit anneau raidisseur (55) comporte un profil en L, en T, en C ou en oméga.

7. Aéronef selon l'une quelconque des revendications 1 à 6,
**caractérisé en ce que** ledit anneau raidisseur (55) est fixé au conduit d'échappement (30) par des attaches de raidissement (56) dissociables.

8. Aéronef selon l'une quelconque des revendications 1 à 7,
**caractérisé en ce que** ladite au moins une fixation (60) comporte un premier support (61) solidaire du conduit d'échappement (30) et un deuxième support (62) solidaire du capot (35), ladite au moins une fixation (60) comprenant une attache de liaison (63) fixant le premier support (61) au deuxième support (62).

9. Aéronef selon l'une quelconque des revendications 1 à 8,
**caractérisé en ce que** ladite au moins une fixation (60) est agencée au moins partiellement dans ledit logement (25).

10. Aéronef selon l'une quelconque des revendications 1 à 9,
**caractérisé en ce que** ladite au moins une fixation (60) est accessible via ledit espace (41) séparant le tronçon éjecteur du capot.

11. Aéronef selon l'une quelconque des revendications 1 à 10,
**caractérisé en ce que** ladite au moins une fixation (60) est adjacente à l'anneau raidisseur (55).

12. Aéronef selon l'une quelconque des revendications 1 à 11,
**caractérisé en ce que** ladite fixation (60) est fixée à l'anneau raidisseur (55).

13. Aéronef selon l'une quelconque des revendications 1 à 12,
**caractérisé en ce que** ladite au moins une fixation (60) comporte plusieurs fixations (60) disposées autour du conduit d'échappement (30).

## Patentansprüche

1. Luftfahrzeug (1) mit mindestens einem Auspuffkanal (30) zum Ausstoßen von Gasen aus einem Triebwerk (10) , wobei der Auspuffkanal (30) teilweise in einer inneren Aussparung (25) des Luftfahrzeugs (1) untergebracht ist, wobei die Aussparung (25) durch mindestens eine Haube (35) von einem äußeren Medium (EXT) getrennt ist, das sich außerhalb des Luftfahrzeugs (1) befindet, wobei die Haube (35) in Bezug auf eine Tragstruktur (3) des Luftfahrzeugs (1) beweglich ist, wobei der Auspuffkanal (30) einen Ejektorabschnitt (32) umfasst, der einen Durchgang (40) der Haube (35) durchquert, ohne die Haube (35) zu berühren, und wobei ein Zwischenraum (41) den Ejektorabschnitt (32) von der Haube (35) trennt,
wobei das Luftfahrzeug (1) mindestens ein mit dem Auspuffkanal (30) gekoppeltes Stabilisierungssystem (50) aufweist, wobei das Stabilisierungssystem (50) einen mit dem Auspuffkanal (30) fest verbundenen Versteifungsring (55) und mindestens eine Befestigung (60) umfasst, die den Auspuffkanal (30) mit der Haube (35) verbindet.

2. Luftfahrzeug nach Anspruch 1,
**dadurch gekennzeichnet, dass** der Versteifungsring (55) den Auspuffkanal (30) umgibt.

3. Luftfahrzeug nach Anspruch 1,
**dadurch gekennzeichnet, dass** sich der Versteifungsring (55) über einen Winkel von weniger als 360 Grad um eine geometrische Achse erstreckt.

4. Luftfahrzeug nach einem der Ansprüche 1 bis 3,
**dadurch gekennzeichnet, dass** der Versteifungsring (55) um den Ejektorabschnitt (32) herum angeordnet ist.

5. Luftfahrzeug nach einem der Ansprüche 1 bis 4,
**dadurch gekennzeichnet, dass** der Versteifungsring (55) zumindest teilweise in dem äußeren Medium (EXT) angeordnet ist.

6. Luftfahrzeug nach einem der Ansprüche 1 bis 5,
**dadurch gekennzeichnet, dass** der Versteifungsring (55) ein L-, T-, C- oder Omega-Profil aufweist.

7. Luftfahrzeug nach einem der Ansprüche 1 bis 6,
**dadurch gekennzeichnet, dass** der Versteifungsring (55) durch lösbare Versteifungsklammern (56) an dem Auspuffkanal (30) befestigt ist.

8. Luftfahrzeug nach einem der Ansprüche 1 bis 7,
**dadurch gekennzeichnet, dass** die mindestens eine Befestigung (60) einen ersten Träger (61), der fest mit der Abgasleitung (30) verbunden ist, und einen zweiten Träger (62), der fest mit der Haube (35) verbunden ist, umfasst, und die mindestens eine Befestigung (60) eine Verbindungsklammer (63) umfasst, die den ersten Träger (61) an dem zweiten Träger (62) befestigt.

9. Luftfahrzeug nach einem der Ansprüche 1 bis 8,
**dadurch gekennzeichnet, dass** die mindestens eine Befestigung (60) zumindest teilweise in der Aussparung (25) angeordnet ist.

10. Luftfahrzeug nach einem der Ansprüche 1 bis 9,
**dadurch gekennzeichnet, dass** die mindestens eine Befestigung (60) über den Zwischenraum (41) zugänglich ist, der den Ejektorabschnitt von der Haube trennt.

11. Luftfahrzeug nach einem der Ansprüche 1 bis 10,
**dadurch gekennzeichnet, dass** die mindestens eine Befestigung (60) an den Versteifungsring (55) angrenzt.

12. Luftfahrzeug nach einem der Ansprüche 1 bis 11,
**dadurch gekennzeichnet, dass** die eine Befestigung (60) an dem Versteifungsring (55) befestigt ist.

13. Luftfahrzeug nach einem der Ansprüche 1 bis 12,
**dadurch gekennzeichnet, dass** die mindestens eine Befestigung (60) mehrere Befestigungen (60) umfasst, die um den Auspuffkanal (30) herum angeordnet sind.

## Claims

1. Aircraft (1) provided with at least one exhaust duct (30) for discharging gases from an engine (10), the exhaust duct (30) being partially accommodated in an internal housing (25) of the aircraft (1), the housing (25) being separated from an external environment (EXT) located outside the aircraft (1) by at least one cowl (35), the cowl (35) being movable relative to a load-bearing structure (3) of the aircraft (1), the exhaust duct (30) comprising an ejector section (32) passing through a passage (40) of the cowl (35) without touching the cowl (35), with a space (41) separating the ejector section (32) from the cowl (35),
the aircraft (1) comprising at least one stabilisation system (50) coupled to the exhaust duct (30), the stabilisation system (50) comprising a stiffening ring (55) rigidly connected to the exhaust duct (30) and at least one fixture (60) connecting the exhaust duct (30) to the cowl (35).

2. Aircraft according to claim 1, **characterised in that** said stiffening ring (55) surrounds the exhaust duct (30).

3. Aircraft according to claim 1, **characterised in that** said stiffening ring (55) extends over an angle of less than 360 degrees about a geometric axis.

4. Aircraft according to any one of claims 1 to 3, **characterised in that** said stiffening ring (55) is disposed around the ejector section (32).

5. Aircraft according to any one of claims 1 to 4, **characterised in that** said stiffening ring (55) is at least partially disposed in the external environment (EXT).

6. Aircraft according to any one of claims 1 to 5, **characterised in that** said stiffening ring (55) comprises an L-shaped, T-shaped, C-shaped or omega-shaped profile.

7. Aircraft according to any one of claims 1 to 6, **characterised in that** said stiffening ring (55) is fixed to the exhaust duct (30) by removable stiffening fasteners (56).

8. Aircraft according to any one of claims 1 to 7, **characterised in that** said at least one fixture (60) comprises a first support (61) rigidly connected to the exhaust duct (30) and a second support (62) rigidly connected to the cowl (35), with said at least one fixture (60) comprising a connecting fastener (63) fixing the first support (61) to the second support (62).

9. Aircraft according to any one of claims 1 to 8, **characterised in that** said at least one fixture (60) is at least partially arranged in said housing (25).

10. Aircraft according to any one of claims 1 to 9, **characterised in that** said at least one fixture (60) is accessible via said space (41) separating the ejector section from the cowl.

11. Aircraft according to any one of claims 1 to 10, **characterised in that** said at least one fixture (60) is adjacent to the stiffening ring (55).

12. Aircraft according to any one of claims 1 to 11, **characterised in that** said fixture (60) is fixed to the stiffening ring (55).

13. Aircraft according to any one of claims 1 to 12, **characterised in that** said at least one fixture (60) comprises a plurality of fixtures (60) disposed around the exhaust duct (30).
